# EUROPEAN PATENT SPECIFICATION

(11) **EP 1 111 286 B1**
(45) Date of publication and mention of the grant of the patent: **18.08.2004**
(21) Application number: 00112662.2
(22) Date of filing: 15.06.2000
(51) Int. Cl.: F16L 13/14, F16L 19/028

(54) **Gas cooking appliances coupling bushing and process for applying it onto such appliances**
Steckverbindung für Gaskochervorrichtungen und Verfahren zur Anwendung der Verbindung in Gaskochervorrichtungen
Raccord à douille pour cuisinières à gaz et procédé de mise en oeuvre du raccord dans les cuisinières à gaz

(30) Priority: 21.12.1999 IT PN990099
(43) Date of publication of application: 27.06.2001
(73) Proprietor: Copreci Systems S.r.l., Mareno di Piave (TV) (IT)
(72) Inventor: Cremonese, Roberto, 31015 Conegliano (TV) (IT)
(74) Representative: Dalla Rosa, Adriano

(56) References cited:
- WO-A-91/14894
- WO-A-99/07494
- FR-A- 1 596 345
- US-A- 3 930 298
- US-A- 5 076 616

## Description

The invention refers to a coupling, preferably for gas cooking appliances, in particular gas ranges and top cooking plates, so shaped as to be able to be coupled to the relative appliances in a mechanical way with few operative steps, by ensuring always an effective gas tightness as well as a high tensile and torsion mechanical strenght.

The invention also relates to a process for manufacturing such coupling for gas cooking appliances.

From WO 9114894 is known a fitting for attachment to a tube by external swaging. The fitting includes an outer surface that fits within the die of a swaging tool and an inner surface that includes axially spaced annular grooves that bite into the tube upon swaging. A reinforcing ring surrounds the outer surface of the fitting to provide reinforcement. The fitting also has an outer end with a special double tapered configuration, such that the tube and inner surface of the fitting form a wedge that equally distribute the load and increases the tube retention capability of the fitting. The fitting also includes positioning means for positioning the fitting within the dies of the swaging tool and further includes tapered axial grooves on the inner surface of the fitting for presenting torsional movement. The fitting and the tube also have a balanced configuration which minimizes fretzing.

The object of the present invention is to realize a coupling, particularly for gas cooking appliances, which has different constructive characteristics and is assembled to the appliances in a manner different than the invention disclosed by WO 9114894, so as to ensure an effective gas tightness as well as a high tensile and torsion mechanical strength.

This coupling is made with the constructive characteristics and the applying steps substantially described, with particular reference to the accompanying claims of the present patent.

The invention will be understood better from the following description, given solely by way of not-limiting example, and with reference to the accompanying drawings, in which :
- Fig. 1 shows a perspective view of a coupling according to the invention ;
- Fig. 2 shows a perspective view of the same coupling of Fig. 1, in a uncoupled condition;
- Fig. 3, 4 and 5 show schematically the different steps for joining the present coupling to the tube distributing gas and the gas supply piping, in a view cutaway in a longitudinal direction.

In the Figures referred to, a bushing 6 of metallic material resisting at high temperatures (of about 350° C- 400° C) is illustrated schematically, the end portion 7 of which is screwed or mechanically secured in another suitable manner to a gas supply piping (not indicated), and the other end portion 8 of which is joined to the tube 9 distributing gas of a gas cooking appliance of conventional type (not shown), such i.e. a gas range, a gas top cooking plate or the like.

Such bushing may be also used in combination with liquid or fluid conduits of various kind.

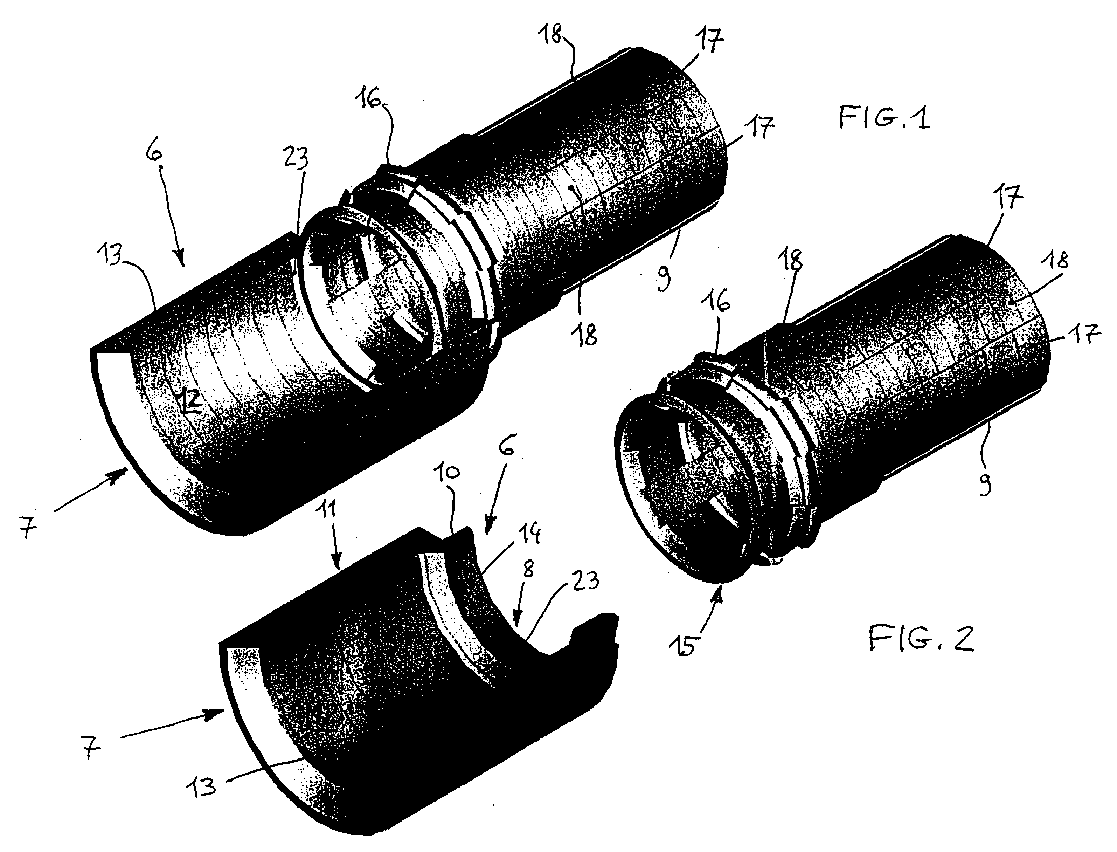

As particularly evident from Figs. 1 and 2, such bushing 6 is shaped preferably of cylindrical form, or polygonal or also of any other adequate geometric form , which is internally bored for the entire lenght thereof, and joined to a short edge 10 of reduced diameter with respect to that of the remaining bushing portion 11.

In the example referred to, the inner hole 12 of the bushing is provided with a threaded portion 13 for a lenght part of the same bushing, in order to permit the gas supply piping to be gas tigthly screwed, and a not threaded portion 14 which is knurled, assigned to be adapted to and mechanically joined as it will be described with the end portion 15 of the tube distributing gas 9.

Besides, such end portion 15 is shaped with at least a projection 16 slightly projected radially along the entire peripheral surface thereof and a plurality of longitudinal hollows 17, distributed for a certain extent in the lenght direction of such peripheral surface, also in the area of the projection 16, and suitably spaced away from each other along all the same peripheral surface, in the present example spaced away from each other in the same measure, thereby delimiting corresponding thin longitudinal strips 18 between one hollow and the next one.

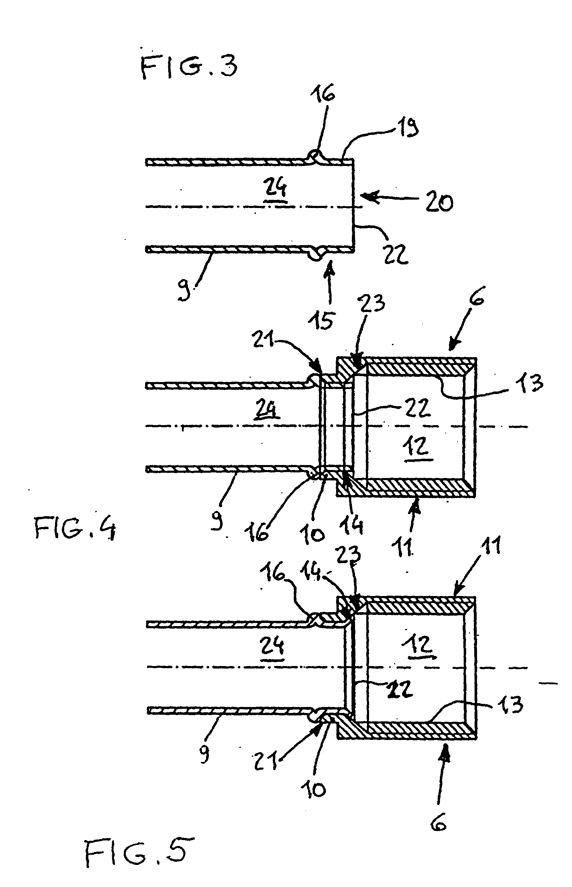

In the Figs. 3, 4 and 5 it is shown schematically the applying process of the present bushing on both the tube distributing gas 9 and the gas supply piping.

In the first step of the present process, visible from the Fig. 3, it can be noticed that the tube distributing gas 9, whose peripheral surface was rectilinear initially, is shaped with a suitable tool (for example a punching machine) on its end portion 15, thereby forming the radial projection 16 which acts as abutment for the bushing 6, as well as a gas distributing tube short portion 19 on the end zone 20 thereof. In the subsequent second step of the process, visible from the Fig. 4, the bushing 6 is inserted by means of a suitable tool with its edge 10 onto the short portion 19 until the front surface 21 of this edge comes into contact against the radial projection 16 and the front surface 22 of the tube distributing gas is almost coincident with the joining zone 23 between the not threaded portion 14 and the threaded portion 13 of the bushing inner hole 12.

Finally, in the subsequent third step of the process, visible from the Fig. 5, a further tool (for example a punch) is inserted inside the threaded portion 13 of both the bushing 6 and the hole 24 of the tube distributing gas, which tool is shaped with an outer profile complemental to that of said hollows 17 and strips 18, and whose insertion determines in the hole 24 of the tube distributing gas the forming of such hollows and strips, as well as the radial expansion of these latter which, therefore, are pushed under pressure against the corresponding inner surface of the bushing hole 12, thereby determining also the radial flaring of the front surface 22 of the tube distributing gas and the consequent deformation of the bushing joining zone 23.

Finally, the gas supply piping is screwed on the hole threaded portion 13 of the bushing.

In this way, the bushing 6 is joined mechanically tightly with the tube distributing gas 9, without need of weldings, by ensuring a high tensile and torsion mechanical strenght, thanks to the presence of the strips 18 which are pushed under pressure against the inner part of the same bushing.

The advantages originated by this invention are : reduction of the manufacturing steps and the used materials, and therefore also considerable reduction of the production costs (about 80% less), elimination of the wastes determined by cracks caused by quick cooling of the weldings previously effected, increasing of productive capacity in the same working times, elimination of cleaning operations and protection against oxidation, which are required by the weldings, as well as easy automation of the process.

## Claims

1. Process for manufacturing a coupling for appliances, preferably gas cooking appliances such as gas ranges and gas top cooking plates, said coupling comprising a bushing(6) and a tube distributing gas (9), said bushing (6) being bored internally for the entire lenght thereof and joined to a short edge (10) with a diameter smaller than that of the remaining bushing portion (11), wherein the bushing inner hole (12) is provided with a threaded portion (13) for connecting at least a gas supply piping on one side and a knurled not threaded portion(14) on the other side for connection of said tube distributing gas (9) or burner of the cooking appliance, the process being **characterized in that** said tube distributing gas (9), whose peripheral surface was rectilinear initially, is shaped with a suitable tool, for example a punching machine, on its end portion (15), thereby forming along the peripheral surface of said end portion (15) at least a radial projection (16) acting as abutment for said bushing (6) as well as a short tube portion (19) on the end zone (20) thereof; **in that** said bushing (6) is inserted by means of a suitable tool with its edge (10) onto said short tube portion (19) until the front surface (21) of this edge comes into contact against said radial projection (16) and the front surface (22) of said tube distributing gas (9) is almost coincident with the joining zone (23) between said not threaded portion (14) and said threaded portion (13) of said inner hole (12); and also **characterized in that** a further tool, for example a punch, is inserted inside said threaded portion (13) of said bushing (6) and the hole (24) of said tube distributing gas (9), so as to form in said hole (24) a plurality of longitudinal hollows (17) and longitudinal strips (18), delimited between one hollow (17) and the next one, which are distributed by a certain extent in the length direction of the peripheral surface of said end portion (15), also in the area of said projection (16), and suitably spaced away from each other along all the same peripheral surface, and **characterized in that** said further tool determines also the radial expansion of said hollows (17) and said strips (18), which are therefore pushed under pressure against the corresponding inner surface of said bushing inner hole (12), by mechanically joining also said knurled not threaded portion (14) of said bushing (6) with said end portion (15) of said tube distributing gas (9), thereby determining also the radial flaring of said front surface (22) of said tube distributing gas (9) and the consequent deformation of said bushing joining zone (23).

## Patentansprüche

1. Verfahren zur Herstellung einer Kopplung für Vorrichtungen, insbesondere Gaskochervorrichtungen wie Gasherde und Gaskochplatten, wobei die Kopplung eine Buchse (6) und ein Gasverteilungsrohr (9) enthält und die Buchse (6) innen über ihre gesamte Länge gebohrt und mit einem kurzen Rand (10) mit einem Durchmesser verbunden ist, der kleiner ist als derjenige des übrigen Buchsenabschnitts (11), wobei die innere Buchsenbohrung (12) mit einem Gewindeabschnitt (13) zum Verbinden mit wenigstens einer Gaszufuhrrohrleitung an einer Seite und mit einem gerändelten, nicht mit Gewinde versehenen Abschnitt (14) an der anderen Seite versehen ist, zum Verbinden mit dem Gasverteilungsrohr (9) oder Brenner der Kochvorrichtung, wobei das Verfahren **dadurch gekennzeichnet ist, daß** das Gasverteilungsrohr (9), dessen Umfangsfläche anfänglich geradlinig war, mit einem geeigneten Werkzeug, beispielsweise einer Stanzmaschine, an seinem Endabschnitt (15) geformt wird, wodurch entlang der Umfangsfläche des Endabschnitts (15) wenigstens ein radialer Vorsprung (16) geformt wird, der als Anlage für die Buchse (6) dient, so wie ein kurzer Rohrabschnitt (19) an dessen Endbereich (20), daß die Buchse (6) mittels eines geeigneten Werkzeugs mit ihrem Rand (10) auf den kurzen Rohrabschnitt (19) aufgesetzt wird, bis die Vorderfläche (21) dieses Randes in Anlage gegen den radialen Vorsprung (16) gerät und die Vorderfläche (22) des Gasverteilungsrohres (9) nahezu mit dem Verbindungsbereich (23) zwischen dem nicht mit Gewinde versehenen Abschnitt (14) und dem Gewindeabschnitt (13) der inneren Bohrung (12) zusammenfällt, und ferner **dadurch gekennzeichnet, daß** ein weiteres Werkzeug, beispielsweise ein Dorn, in den Gewindeabschnitt (13) der Buchse (6) und die Bohrung (24) des Gasverteilungsrohres (9) eingeführt wird, um in der Bohrung (24) eine Vielzahl von längsgerichteten Aussparungen (17) und längsgerichteten Streifen (18) zu formen, die zwischen einer Aussparung (17) und der nächsten begrenzt sind und über eine bestimmte Erstreckung in Längsrichtung der Umfangsfläche des Endabschnitts (15) verteilt sind, ebenfalls in dem Bereich des Vorsprungs (16) und voneinander entlang derselben Umfangsfläche geeignet beabstandet sind, und **dadurch gekennzeichnet, daß** das weitere Werkzeug auch die radiale Ausdehnung der Aussparungen (17) und der Streifen (18) festlegt, die daher unter Druck gegen die entsprechende Innenfläche der inneren Bohrung (12) der Buchse gedrückt werden und auch den gerändelten, nicht mit Gewinde versehenen Abschnitt (14) der Buchse (16) mit dem Endabschnitt (15) des Gasverteilungsrohres (9) mechanisch verbinden, wodurch auch die radial nach außen verlaufende Aufweitung der vorderen Fläche (22) des Gasverteilungsrohres (9) und die entsprechende Verformung des Buchsenverbindungsbereichs (23) festgelegt werden.

## Revendications

1. Procédé de fabrication d'un raccord pour des appareils, de préférence des appareils de cuisson au gaz tels que des cuisinières à gaz et des plaques de cuisson au gaz, ledit raccord comportant une douille (6) et un tube de distribution de gaz (9), ladite douille (6) étant alésée intérieurement sur toute sa longueur; et étant reliée à un bord court (10) avec un diamètre plus petit que celui de la partie de douille restante (11), le trou intérieur de douille (12) étant muni d'une partie filetée (13) pour connexion d'au moins un tuyau d'alimentation en gaz sur un premier côté, et d'une partie non filetée moletée (14) sur l'autre côté, pour connexion audit tube de distribution au gaz (9) ou brûleur de l'appareil de cuisson, le procédé étant **caractérisé en ce que** ledit tube de distribution de gaz (9), dont la surface périphérique était initialement rectiligne, est mis en forme à l'aide d'un outil adapté, par exemple une machine de poinçonnement, sur sa partie d'extrémité (15), en formant ainsi le long de la surface périphérique de ladite partie d'extrémité (15) au moins une saillie radiale (16) agissant comme une butée pour ladite douille (6), de même qu'une partie de tube court (19) sur sa zone d'extrémité (20) ; **en ce que** ladite douille (6) est insérée par l'intermédiaire d'un outil adapté en ayant son bord (10) sur ladite partie de tube court (19) jusqu'à ce que la surface avant (21) de ce bord vienne en contact contre la saillie radiale (16), et la surface avant (22) dudit tube de distribution de gaz (9) coïncide presque avec la zone de liaison (23) entre ladite partie non filetée (14) et ladite partie filetée (13) dudit trou intérieur (12) ; et **caractérisé en ce qu'**un outil supplémentaire, par exemple un poinçon, est inséré à l'intérieur de ladite partie filetée (13) de ladite douille (6) et le trou (24) dudit tube de distribution de gaz (9), de manière à former dans ledit trou (24) une pluralité de creux longitudinaux (17) et de bandes longitudinales (18), délimitées entre un creux (17) et le suivant, qui sont répartis sur une certaine étendue dans la direction longitudinale de la surface périphérique de ladite partie d'extrémité (15), également dans la zone de ladite saillie (16), et espacés de manière appropriée les uns des autres le long de toute la même surface périphérique, et **caractérisé en ce que** ledit outil supplémantaire détermine également l'étendue radiale desdits creux (17) et desdites bandes (18), qui sont par conséquent poussés sous pression contre la surface intérieure correspondante dudit trou intérieur de douille (12), en réunissant également mécaniquement ladite partie non filetée moletée (14) de ladite douille (6) et ladite partie d'extrémité (15) dudit tube de distribution de gaz (9), en déterminant ainsi également l'évasement radial de ladite surface avant (22) dudit tube de distribution de gaz (9) et la déformation résultante de ladite zone de liaison de douille (23).
